# EUROPÄISCHE PATENTSCHRIFT

(11) **EP 2 607 038 B1**
(45) Veröffentlichungstag und Bekanntmachung des Hinweises auf die Patenterteilung: **06.06.2018**
(21) Anmeldenummer: 12008359.7
(22) Anmeldetag: 15.12.2012
(51) Int. Cl.: B29B 15/12

(54) **Aufbringen von Bindermaterial auf ein Hochleistungstextil**
Application of binder material to a high performance textile
Application de matériau de liaison sur un textile à haute performance

(30) Priorität: 22.12.2011 DE 102011122070
(43) Veröffentlichungstag der Anmeldung: 26.06.2013
(73) Patentinhaber: Premium AEROTEC GmbH, 86179 Augsburg (DE)
(72) Erfinder: Kuntz, Julian, 86179 Augsburg (DE)
(74) Vertreter: Isarpatent

(56) Entgegenhaltungen:
- EP-A1- 2 055 461
- WO-A1-93/08322
- DE-B3-102007 032 904

## Beschreibung

Die vorliegende Erfindung betrifft eine Vorrichtung zum Auftragen von Tropfen eines Bindermaterials auf ein Hochleistungstextil, sowie ein Verfahren zur Herstellung eines mit Bindermaterial versehenen textilen Halbzeugs zur Anfertigung eines Faserverbundbauteils.
Im Zusammenhang mit der Herstellung von Faserverbundbauteilen werden textile Halbzeuge mit Bindern versehen, beispielsweise mit aufschmelzenden Bindern, die durch Bepulvern oder Besprühen aufgebracht werden. Aus der DE 10 2007 032904 B3 ist beispielsweise bekannt, ein Bindermaterial als Strukturfixierungsmittel in Bereichen vorzusehen, die beim Einlegen in Formen einer mit geringen Scherverformung ausgesetzt sind, wobei beispielsweise flüssige Strukturfixierungsmittel durch Sprühen, Tropfen oder Schwammstrukturen aufgebracht werden. Die Strukturfixierung ist auf konkrete Zuschnittsgeometrien ausgerichtet und beispielsweise vor dem Schneidprozess vorgesehen. Für den Auftrag fester Strukturfixierungsmittel wird eine thermische Aktivierung thermoplastischer Komponenten des Verstärkungstextils oder aufgebrachter thermoplastischer Vliese oder Folien beschrieben. Das Aufbringen des Binders ist auf den sich anschließenden Herstellungsprozess des Faserverbundbauteils ausgerichtet. Es hat sich jedoch gezeigt, dass die Handhabung der Verstärkungs-bzw. Hochleistungsfasern bei der Herstellung von Vorformlingen (textile Gebilde aus mehreren Textillagen, die zugeschnitten und bereits in Bauteilform gebracht sind) aufgrund deren weicher und nachgiebiger Struktur mühsam und aufwendig ist. Es hat sich außerdem als nachteilig erwiesen, dass beispielsweise für einen Bepulverungsprozess das erforderliche Erwärmen des Textils zum Anschmelzen des Binders einen recht hohen Platzbedarf bedeutet bei gleichzeitig vermehrtem Handhabungsaufwand. Bei Aufsprühen eines Binders ist der Bindersprühnebel außerdem oftmals auch gesundheitlich problematisch.

Dokument EP2055461 beschreibt eine Vorrichtung und ein Verfahren zum Auftragen von Tropfen eines Bindermaterials auf ein Faser in einer Faserwickelmaschine. Es besteht daher ein Bedarf für ein leichter zu handhabendes Halbzeug für die Anfertigung von Faserverbundbauteilen, wobei das Halbzeug möglichst einfach herstellbar sein sollte.

Diese Aufgabe wird durch eine Vorrichtung zum Auftragen von Tropfen eines Bindermaterials auf ein Hochleistungstextil und ein Verfahren zur Herstellung eines mit Bindermaterial versehenen textilen Halbzeugs zur Anfertigung eines Faserverbundbauteils nach einem der unabhängigen Ansprüche erreicht. Beispielhafte Ausführungsformen sind in den abhängigen Ansprüchen dargestellt.

Gemäß einem ersten Aspekt der Erfindung ist eine Vorrichtung zum Auftragen von Tropfen eines Bindermaterials auf ein Hochleistungstextil vorgesehen, wobei die Vorrichtung eine Lagervorrichtung zum Lagern von Bindermaterial, eine Aufheizvorrichtung zum Aufschmelzen des Bindermaterials und eine Bebinderungseinrichtung mit wenigstens einer Düse zum Aufbringen des flüssigen Bindermaterials aufweist. Die Lagervorrichtung ist zum Lagern von Bindermaterial angepasst, welches bei normalen Raumbedingungen fest oder mindestens derart viskos ist, dass eine Tropfenbildung an der Düse nicht möglich ist. Die Aufheizvorrichtung ist angepasst zum Erwärmen des Bindermaterials über eine Schmelztemperatur des Bindermaterials, bei der eine Tropfenbildung des Bindermaterials an der Düse möglich ist. Die wenigstens eine Düse ist angepasst zum Aufbringen des Bindermaterials auf ein Hochleistungstextil in einzelnen, in der Menge und/oder Anzahl dosierbaren Bindertropfen.

Das Bindermaterial kann in der Lagervorrichtung auch in Pulverform vorliegen. Ein Pulver lässt sich z.B. besser in die Aufheizvorrichtung befördern als ein fester Block.)

Der Begriff "Hochleistungstextil" umfasst z.B. Multiaxialgelege, Gewebe, Geflechte, Gewirke und/oder Vliese, und weist beispielsweise eine Vielzahl von Hochleistungsfasern auf. Der Begriff "Hochleistungstextil" umfasst insbesondere auch ein textiles Material aus Verstärkungsfasern zur Herstellung von Faserverbundkunststoffen, was oftmals auch als Halbzeug aus Verstärkungsfasern zur Herstellung von Faserverbundkunststoffen bezeichnet wird, wobei der Begriff an dieser Stelle im Zusammenhang mit der vorliegenden Erfindung leicht irreführend ist, da nur ein Roh-Halbzeug vorliegt (siehe weiter unten).

Der Begriff "normale Raumbedingungen" bedeutet eine Raumtemperatur von ca. 0 °C bis zu 40 °C, vorzugsweise ca. 20 °C, sowie einen Luftdruck von ca. 0,5 bar bis 1,5 bar, vorzugsweise ca. 1 bar.

Der Begriff "Schmelztemperatur" bedeutet diejenige Temperatur, bei der z.B. ein festes, bzw. hochviskoses Material eine deutlich kleinere Viskosität hat, bzw. flüssig ist, weshalb auch der Begriff "Verflüssigungstemperatur" verwendet wird.

Das Aufbringen des Binders hat den Vorteil, dass bei der Herstellung von Vorformlingen, d.h. textilen Gebilden aus mehreren Textillagen, die zugeschnitten und bereits in Bauteilform gebracht sind, die Einzellagen miteinander verklebt werden können. Dafür wird der Binder thermisch aktiviert. Außerdem hilft der Binder nach dem Aktivieren, dass der Vorformling (Preform) seine dreidimensionale Form hält. Ein weiterer Vorteil liegt darin, dass ein homogenes Halbzeug mit einer Binderverteilung, die überall gleich ist, zur Verfügung gestellt wird, z.B. um sicherzustellen, dass der später damit hergestellte Faserverbundwerkstoff überall gleiche Eigenschaften hat.

Ein weiterer Vorteil ist die Möglichkeit ein thermisch verklebbares Halbzeug zur Verfügung zu stellen.

Die Bindertropfen können auf das Hochleistungstextil einzeln (auf-) getropft oder aufgespritzt werden. Das Aufspritzen erfolgt z.B. mittels elektrostatischer Aufladung. Das Aufspritzen kann auch mittels einer Pumpvorrichtung und steuerbarer Düsen erfolgen.

Das Bindermaterial ist mit der Bebinderungseinrichtung in einer reproduzierbaren Menge und in einer reproduzierbaren Verteilung aufbringbar.

Die Bebinderungseinrichtung weist beispielsweise eine ansteuerbare Flächeneinheit von max. 5 mm x 5 mm auf; wobei die Bindermenge für diese Flächeneinheit einstellbar ist, d.h. reproduzierbar dosiert werden kann. Die Bebinderungseinrichtung kann auch als Binderstrahldruckeinrichtung bezeichnet werden.

Die Bebinderungseinrichtung kann pro Düse einzelne Tropfen dosiert aufbringen, wobei sowohl die Menge pro Tropfen dosiert werden kann, als auch die Position. Die Tropfen können in Form eines digitalen Rasters zeilenweise aufgebracht werden, wobei in jedem Rasterfeld entweder ein Bindertropfen mit einer bestimmten dosierten Menge oder kein Bindertropfen aufgebracht wird. So kann ein bestimmtes, programmiertes Muster aufgebracht werden, optional ein sich periodisch wiederholendes regelmäßiges Muster, das über das ganze textile Halbzeug gleich ausgebildet ist.

Im Ergebnis liegt dann ein Halbzeug vor. Der Begriff "Halbzeug" bezeichnet ein Material, das als vorbereitetes Material vorliegt und in einem Zuschnitt und durch weitere Verfahrensschritte, wie z.B. Umformen, Aushärten etc., zum fertigen Bauteil verarbeitet wird. Ein Halbzeug ist demnach ein unkonfektioniertes Textil, z.B. ein mit Binder versehenes Hochleistungstextil. Das Hochleistungstextil stellt also ein Roh-Halbzeug dar. Der Begriff "Roh-Halbzeug" bezeichnet ein Material, das bereits ein zusammengesetztes Ausgangsmaterial bildet und das in weiteren Schritten zum Halbzeug umgewandelt wird, wobei die Umwandlung ein Zuführen eines weiteren Materials und/oder einen Behandlungsschritt umfasst, wie das gemäß der Erfindung vorgesehene Zuführen des Bindermaterials.

Gemäß einer beispielhaften Ausführungsform ist in der Lagervorrichtung ein Bindermaterial gelagert, das bei normalen Raumbedingungen fest oder mindestens hochviskos ist. Das Bindermaterial kann in der Lagervorrichtung auch in Pulverform vorliegen.

Der Begriff "fest" bedeutet, dass das Material bei normalen Raumbedingungen, z.B. bei 20 °C und normalen Luftdruckverhältnissen (Aufenthaltsbedingungen) einen festen Zustand, d.h. keinen flüssigen Aggregatzustand aufweist. Der Begriff "hochviskos" bedeutet, dass das Material bei z.B. 20 °C und normalen Luftdruckverhältnissen (Aufenthaltsbedingungen) zwar einen weichen, eventuell klebrigen Zustand hat, aber derart zähflüssig ist, dass mit bloßem Auge keine Fließbewegungen des Materials innerhalb eines Tages, bzw. auch innerhalb mehrerer Tage, feststellbar sind.

Gemäß einem weiteren Ausführungsbeispiel weist die Lagervorrichtung ein Lagervolumen und die Aufheizvorrichtung ein Aufheizvolumen auf, wobei das Aufheizvolumen kleiner als das Lagervolumen ist. Das Aufheizvolumen ist so ausgelegt, dass eine darin enthaltene Verbrauchsmenge über einen Verflüssigungszeitraum auf die Verflüssigungstemperatur erhitzt wird, wobei der Verflüssigungszeitraum kleiner als ein bei dieser Verflüssigungstemperatur bei diesem Material zu erwartender Aushärtezeitraum des Bindermaterials ist.

Die später bei der Faserverbundherstellung aufgebrachte Aushärtetemperatur für das Matrixharz kann oft noch höher sein als die Schmelztemperatur des Binders, weshalb der Begriff Verflüssigungstemperatur verwendet wird. Bei den meisten Duroplasten gibt es z.B. bei jeder Temperatur einen Aushärtevorgang, nur ist er z.B. bei Raumtemperatur extrem langsam (z.B. mehr als ein Jahr um auf 80% Aushärtung zu kommen), und bei höheren Temperaturen schneller (z.B. bei 120°C 30 Minuten um auf 80% Aushärtung zu kommen). Daher ist gemäß der Erfindung die Zeit des Erwärmens kleiner gewählt als die Zeit, die der Binder bei dieser Verflüssigungstemperatur flüssig sein kann, ohne durch fortschreitende Aushärtereaktion fest zu werden.
Das Bindermaterial wird gemäß der Erfindung nur so lange erhitzt, dass ein vollständiges Aushärten vermieden wird.
Die Aufheiztemperatur ist zum Beispiel so hoch und der Abstand der Düse zur Halbzeugoberfläche ist im Bezug zur Geschwindigkeit der Tropfen so gering, dass der Bindertropfen noch flüssig ist, wenn er auf das Textil auftrifft, also noch nicht wieder unter eine Temperatur abgekühlt ist, unter der er wieder fest wäre oder nicht mehr am Textil haften bleibt.

Gemäß der Erfindung weist die Bebinderungseinrichtung eine Druckvorrichtung oder eine Druckerleiste auf. Die Druckvorrichtung fährt das Hochleistungstextil senkrecht zur Materialproduktionsrichtung zeilenweise ab und weist die wenigstens eine Düse auf. Die Druckerleiste erstreckt sich über die gesamte Breite des Hochleistungstextils und weist eine Vielzahl von Düsen auf. Mit der Bebinderungseinrichtung kann das Bindermaterial mit der Druckvorrichtung oder der Druckerleiste in einer reproduzierbaren Menge und in einer reproduzierbaren Verteilung aufgebracht werden.
Gemäß einer weiteren Ausführungsform ist eine Textilherstellungsvorrichtung zur Anfertigung des Hochleistungstextils vorgesehen, wobei mit der Bebinderungseinrichtung das Bindermaterial auf das Hochleistungstextil vor einer Zuführung des bebinderten Hochleistungstextils als fertiges Halbzeug an eine Lagereinrichtung aufgebracht werden kann. Die Bebinderungseinrichtung ist also z.B. direkt auf oder an der Textilherstellungsvorrichtung montiert.

Hierdurch wird z.B. vermieden, dass das Material unnötig auf- und abgerollt werden muss. Dadurch, dass das textile Gewebe nicht erneut ab- und aufgerollt werden muss, ergeben sich Vorteile bezüglich des Bebinderungsprozesses und auch bezüglich des logistischen Aufwandes.

Die Lagereinrichtung kann z.B. eine Lagerrolle sein, auf der das bebinderte Halbzeug aufgerollt ist. Die Textilherstellungsvorrichtung weist z.B. einen Schussfaden-Zulauf und einen Kettfaden-Zulauf und eine Webstuhleinrichtung auf. Die Textilherstellungsvorrichtung kann z.B. wenigstens eine Legeeinheit und eine Wirkeinheit aufweisen, oder auch mehrere Legeeinheiten und eine Wirkeinheit. Die Textilherstellungsvorrichtung weist z.B. eine erste Legeeinheit und wenigstens eine zweite Legeeinheit auf, die jeweils wenigstens ein erstes Sub-Hochleistungstextil anfertigen, sowie eine Wirkeinheit zu Verbindung der Sub-Hochleistungstextile, wobei die Bebinderungseinrichtung eine Binderstrahldruckeinrichtung mit wenigstens zwei Druckeinheiten ist. Wenigstens eine Druckeinheit ist vorgesehen, die das Bindermaterial auf jeweils eines der Sub-Hochleistungstextile aufbringt. Das Sub-Hochleistungstextil kann als ein Sub-Gelege ausgebildet sein.

Der ersten Legeeinheit ist z.B. eine erste Druckeinheit zugeordnet und der zweiten Legeeinheit eine zweite Druckeinheit. Der Wirkeinheit ist z.B. eine zusätzliche Druckeinheit zugeordnet.

Die Druckeinheit kann Bindermaterial von einer Seite oder von zwei Seiten auf das Hochleistungstextil aufbringen.

Gemäß einer weiteren Ausführungsform ist ein Strukturerkennungssystem vorgesehen, welches eine Struktur des Hochleistungstextils ermittelt, wobei die Bindertropfen mit der Bebinderungseinrichtung auf die Struktur des Hochleistungstextils abgestimmt aufgebracht werden können.

Gemäß einem zweiten Aspekt der Erfindung ist auch die Verwendung einer Vorrichtung nach einem der oberhalb beschriebenen Ausführungsbeispiele zum Auftragen von Bindermaterial auf ein Hochleistungstextil aus Hochleistungs- bzw. Verstärkungsfasern vorgesehen, z.B. zur Herstellung von Faserverbundbauteilen.

Gemäß einem dritten Aspekt der Erfindung ist ein Verfahren zur Herstellung eines mit Bindermaterial versehenen textilen Halbzeugs zur Anfertigung eines Faserverbundbauteils vorgesehen, das die folgenden Schritte umfasst.
- In einem ersten Schritt erfolgt das Zuführen eines Bindermaterials von einer Lagervorrichtung an eine Aufheizvorrichtung.
- In einem zweiten Schritt erfolgt ein Erwärmen des in der Aufheizvorrichtung befindlichen Bindermaterials über eine Schmelztemperatur des Bindermaterials.
- In einem dritten Schritt wird das flüssige Bindermaterial an wenigstens eine Bebinderungseinrichtung mit wenigstens einer Düse zugeführt.
- In einem vierten Schritt wird das Bindermaterial auf ein Hochleistungstextil durch die wenigstens eine Düse in einzelnen, in der Menge und/oder Anzahl dosierbaren Bindertropfen aufgebracht.
Erfindungsgemäß ist das Bindermaterial bei normalen Raumbedingungen mindestens derart viskos, dass eine Tropfenbildung an der Düse nicht möglich ist. Die Schmelztemperatur ist dabei mindestens derart hoch, dass eine Tropfenbildung des Bindermaterials an der Düse möglich ist.

Der erste Schritt wird auch als Schritt a) bezeichnet, der zweite Schritt als Schritt b), der dritte Schritt als Schritt c) und der vierte Schritt als Schritt d). Das Verfahren "zur Herstellung eines mit Bindermaterial versehenen textilen Halbzeugs zur Anfertigung eines Faserverbundbauteils" kann auch als Verfahren "zum Aufbringen eines Binders" bezeichnet werden.

Das Bindermaterial kann von einer oder von zwei Seiten auf das Hochleistungstextil aufgebracht werden.

Zum Aufbringen des Bindermaterials wird das Hochleistungstextil nicht erwärmt.

Gemäß einem weiteren Ausführungsbeispiel ist das Bindermaterial bei Raumtemperatur fest oder sehr hochviskos.

Das Bindermaterial wird in einer reproduzierbaren Menge und in einer reproduzierbaren Verteilung in Schritt d) aufgebracht. Der Begriff "reproduzierbar" bedeutet, dass das Bindermaterial kontinuierlich in der gleichen Art und Weise aufgebracht werden kann, d.h. in der gleichen Menge, der gleichen Dichte, und/oder der gleichen Verteilung über ein Flächenmaß, wobei Abweichungen in den üblichen Toleranzgrenzen auftreten können.

Das Hochleistungstextil kann beispielsweise eine Textil-Feinheit, z.B. eine Gelege-Feinheit oder eine Gewebe-Feinheit aufweisen, und die reproduzierbare Verteilung ist an die Textil-Feinheit angepasst.

Gemäß einem weiteren Ausführungsbeispiel wird als Bindermaterial und als Matrixmaterial, das bei der Herstellung des späteren Faserverbundbauteils verwendet wird, der gleiche Werkstoff verwendet. Das Matrixmaterial dient z.B. der Formgebung und der Stützung der Fasern, und füllt die Faserzwischenräume aus. Bei dem Binder handelt es sich z.B. um das gleiche Infusionsharz, mit dem später das ganze Bauteil getränkt und ausgehärtet wird.

Gemäß einem weiteren Ausführungsbeispiel wird in Schritt d) das Bindermaterial mit den Tropfen derart aufgebracht, dass das Hochleistungstextil abwechselnd erste Bereiche mit Bindermaterial und zweite Bereiche ohne Bindermaterial aufweist, oder derart, dass das Bindermaterial über die Breite des Hochleistungstextils mit der gleichen Verteilung aufgebracht wird.

Die ersten und zweiten Bereiche werden beispielsweise in der Längsrichtung und/oder der Querrichtung abwechselnd angeordnet. Das Bindermaterial wird z.B. in einem Muster/Raster aufgebracht; oder kann auch punktuell aufgebracht werden. Das Bindermaterial kann beispielsweise in einem Punktraster aufgebracht werden, bei dem die Bindermenge pro Punkt dosiert werden kann, wobei auch einzelne Punkte ausgelassen werden können.

Das Muster orientiert sich z.B. an der Textilstruktur des Hochleistungstextils. Das Muster kann z.B. auch in einem bestimmten Verhältnis zur Struktur des Hochleistungstextils stehen.

Das Bindermaterial kann zeilenweise aufgebracht werden, wobei das Aufbringen pro Zeile und entlang der Zeile, oder pro Zeile und für die gesamte Zeile gleichzeitig erfolgt.

Gemäß einem weiteren Ausführungsbeispiel ist das Bindermaterial ein Duroplast, das bei einer bestimmten Temperatur (Aushärtetemperatur) über einen jeweils dieser Temperatur zugeordneten Aushärtezeitraum aushärtet. In Schritt b) wird eine Verbrauchsmenge über einen Verflüssigungszeitraum auf die Aushärtetemperatur erhitzt, wobei der Verflüssigungszeitraum kleiner als der Aushärtezeitraum ist. Der Schritt b) ist bei dem Duroplast ausreichend kurz, so dass ein vollständiges Aushärten des Duroplasts vermieden wird.

Gemäß einem weiteren Ausführungsbeispiel ist das Bindermaterial ein Thermoplast, der in einem Einsatztemperaturbereich fest ist und der oberhalb des Einsatztemperaturbereichs weich und bei Überschreiten einer Schmelztemperatur flüssig wird, wobei das Erhitzen in Schritt b) auf mindestens die Schmelztemperatur erfolgt. In Schritt c) wird das Bindermaterial z.B. auf ein fertig zusammengestelltes Hochleistungstextil aufgebracht, welches als Roh-Halbzeug eine Hochleistungstextil-Produktionseinrichtung verlässt.

Das Bindermaterial wird in der Lagervorrichtung bei festem Aggregatszustand, bzw. bei hochviskosem Aggregatszustand gelagert. Die Verbrauchsmenge ist kleiner als die Vorratsmenge.

Das mit Bindermaterial versehene Hochleistungstextil wird als vorbereitetes Ausgangs-Halbzeug (oder Roh-Halbzeug) auf einer Lagervorrichtung gelagert. Das bebinderte Hochleistungstextil ist z.B. als Halbzeug auf einer Rollvorrichtung aufgerollt gelagert und kann so auch transportiert werden. Das Hochleistungstextil in Schritt a) ist z.B. ein unkonfektioniertes Gelege.

Gemäß einem weiteren Ausführungsbeispiel wird zum Aufbringen des Bindermaterials das Hochleistungstextil nicht erwärmt.

Gemäß einem weiteren Beispiel kann das Hochleistungstextil eine Textilstruktur aufweisen mit einer ersten Vielzahl von Verstärkungsfaserbündeln aus Hochleistungsfasern, wobei die Verstärkungsfaserbündel zu einer Struktur angeordnet sind, und das Bindermaterial kann in direkter Abhängigkeit der Textilstruktur in einem Muster aufgebracht werden, welches sich an der Struktur der Verstärkungsfaserbündel orientiert.

Gemäß einem weiteren Ausführungsbeispiel weist das Hochleistungstextil eine Textilstruktur auf mit der ersten Vielzahl von Verstärkungsfaserbündeln aus Hochleistungsfasern, wobei die Verstärkungsfaserbündel zu einer Struktur angeordnet sind. Das Bindermaterial wird in direkter Abhängigkeit der Textilstruktur in einem Muster aufgebracht, welches sich an der Struktur der Verstärkungsfaserbündel orientiert. Das Bindermaterial wird dabei als eine Fixierungsstruktur aufgebracht, wobei bei der Textilstruktur zwischen benachbarten Verstärkungsfaserbündeln Verschiebungsbereiche ausgebildet sind und benachbarte Verstärkungsfaserbündel gegeneinander verschiebbar sind. Das Bindermaterial fixiert die Verstärkungsfaserbündel in Abhängigkeit von der Textilstruktur derart mit einem Fixierungsmuster, dass die Verstärkungsfaserbündel wenigstens teilweise fixiert sind und die Verschiebungsbereiche wenigstens teilweise frei bleiben.

Gemäß einem weiteren Ausführungsbeispiel wird das Bindermaterial auf ein bereits gefertigtes Hochleistungstextil aufgebracht, das von einer Rolle, auf der es aufgerollt gelagert ist, abgerollt wird.

Gemäß einem weiteren Ausführungsbeispiel wird das Bindermaterial im unmittelbaren Anschluss an eine Fertigung des Hochleistungstextils auf letzteres aufgebracht. Die Fertigung umfasst beispielsweise das Weben eines Gewebes mit einem Schussfaden-Zulauf und einem Kettfaden-Zulauf in einer Webstuhleinrichtung. Die Fertigung kann auch das Legen eines Hochleistungstextils mit wenigstens einer Legeeinheit und einer Wirkeinheit umfassen.

Gemäß einem weiteren Ausführungsbeispiel wird das Bindermaterial während der Fertigung des Hochleistungstextils aufgebracht. Die Fertigung umfasst beispielsweise:
- Legen eines ersten Sub-Hochleistungstextils oder Sub-Geleges (erste Lage) mit einer ersten Legeeinheit;
- Aufbringen einer ersten Teilmenge des Bindermaterials;
- Legen eines zweiten Sub-Hochleistungstextils oder Sub-Geleges (zweite Lage) mit einer zweiten Legeeinheit;
- Aufbringen einer zweiten Teilmenge des Bindermaterials;
- Verwirken der Sub-Hochleistungstextile in einer Wirkeinheit; und
- Aufbringen einer finalen Teilmenge des Bindermaterials.

Gemäß einem Aspekt der Erfindung ist zum Aufbringen eines Bindermaterials vorgesehen, dass dieses derart erwärmt wird, dass es in Tropfenform dosierbar auf das Textil aus Hochleistungsfasern aufgebracht werden kann. Ein Erwärmen des Textils selbst ist dabei nicht erforderlich. Das Erwärmen, bzw. Erhitzen oder Aufheizen des Bindermaterials erfolgt dabei über einen derart kurzen Zeitraum, dass ein vollständiges Aushärten des Bindermaterials nicht eintritt, sondern lediglich ein Verflüssigen des Bindermaterials, um dieses kontrolliert in Tropfenform aufbringen zu können. Das Bindermaterial ist bei normalen Bedingungen, d.h. bei denjenigen Bedingungen, unter denen das Halbzeug verwendet wird, z.B. zugeschnitten, in Formen eingelegt oder anderweitig gehandhabt wird, fest oder zumindest hochviskos, wodurch sich eine bessere Handhabung des Halbzeugs ergibt. Dadurch wird beispielsweise die Handhabung bei der Herstellung von Faserverbundbauteilen vereinfacht, da sich das sozusagen vorverstärkte textile Material, welches aufgrund der Bebinderung steifer ist im Vergleich zu dem reinen Textilmaterial, leichter handhaben lässt. Die Verwendung eines Binders kann beispielsweise dem Stabilisieren dienen. Ein Grund für den Binder ist auch das Verkleben mehrere Lagen zur Herstellung von Vorformlingen. Wenn ein bei Raumtemperatur fester Binder verwendet wird, bietet dies den Vorteil, dass keine Trennfolie beim Aufrollen des Textils benötigt wird, und dass der Binder sich nicht in die Fasern durch die Oberflächenspannung einzieht und dann nicht mehr an der Oberfläche zum Kleben vorliegen würde. Erfindungsgemäß kann die Bebinderung mit dem tropfenförmig aufgebrachten Bindermaterial sowohl in den Herstellungsprozess des textilen Ausgangsmaterials integriert werden, als auch im Anschluss an diesen stattfinden. Im Ergebnis steht jedenfalls ein Halbzeug zur Verfügung, das beispielsweise auf Rollen gelagert transportiert werden kann. Somit wird für die weiteren Schritte ein bereits vorgestärktes textiles Material zur Verfügung gestellt. Die Verstärkung erfolgt dabei erfindungsgemäß bereits an dem Ausgangsmaterial für das Halbzeug, und ist daher unabhängig von eventuell später vorgesehenen Bauteilgeometrien.
Es sei darauf hingewiesen, dass die Merkmale der Ausführungsbeispiele und Aspekte der Vorrichtungen auch für Ausführungsformen und Aspekte des Verfahrens sowie Verwendung der Vorrichtung gelten und umgekehrt. Außerdem können auch diejenigen Merkmale frei miteinander kombiniert werden, bei denen dies nicht explizit erwähnt ist.
Nachfolgend wird anhand der beigefügten Zeichnungen näher auf Ausführungsbeispiele der Erfindung eingegangen. Es zeigen:
- **Fig. 1**: eine Vorrichtung zum Auftragen von Tropfen eines Bindermaterials auf ein Hochleistungstextil gemäß einem Ausführungsbeispiel der Erfindung;
- **Fig. 2**: Schritte eines Verfahrens zur Herstellung eines mit Bindermaterial versehenen textilen Halbzeugs zur Anfertigung eines Faserverbundbauteils gemäß einem Ausführungsbeispiel der Erfindung;
- **Fig. 3**: ein Ausführungsbeispiel einer Vorrichtung zum Auftragen eines Bindermaterials gemäß der Erfindung mit einer Druckvorrichtung, die das Hochleistungstextil senkrecht zur Materialproduktionsrichtung zeilenweise abfährt;
- **Fig. 4**: eine Vorrichtung zum Auftragen von Tropfen eines Bindermaterials gemäß einem Ausführungsbeispiel der Erfindung mit einer Druckerleiste, die sich über die gesamte Breite des Hochleistungstextils erstreckt und eine Vielzahl von Düsen aufweist;
- **Fig. 5 und 6**: weitere Ausführungsbeispiele einer erfindungsgemäßen Vorrichtung zum Auftragen des Bindermaterials im Ausschnitt;
- **Fig. 7**: ein Ausführungsbeispiel für eine Vorrichtung zum Auftragen des Bindermaterials gemäß der vorliegenden Erfindung im Zusammenhang mit Lagervorrichtungen;
- **Fig. 8**: ein Ausführungsbeispiel mit einer Textilherstellungsvorrichtung zur Anfertigung des Hochleistungstextils;
- **Fig. 9**: ein Ausführungsbeispiel für eine Textilherstellungsvorrichtung gemäß der vorliegenden Erfindung nach Fig. 8;
- **Fig. 10**: ein weiteres Ausführungsbeispiel für eine Textilherstellungsvorrichtung aus Fig. 8;
- **Fig. 11A**: ein weiteres Ausführungsbeispiel einer Textilherstellungsvorrichtung nach Fig. 8;
- **Fig. 11B**: eine perspektivische Ansicht der Vorrichtung aus Fig. 11A;
- **Fig. 12**: ein Strukturerkennungssystem im Zusammenhang mit der erfindungsgemäßen Vorrichtung zum Auftragen von Bindermaterial;
- **Fig. 13 - 16**: weitere Ausführungsbeispiele von Verfahren zur Herstellung eines mit Bindermaterial versehenen textilen Halbzeugs zur Anfertigung eines Faserverbundbauteils gemäß der vorliegenden Erfindung; und
- **Fig. 17A - C**: weitere Ausführungsbeispiele für Verfahren zum Auftragen Bindermaterial gemäß der vorliegenden Erfindung.

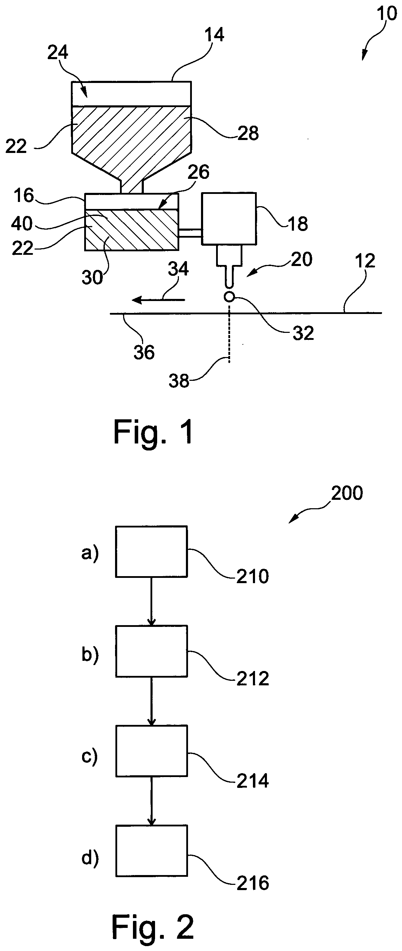

Fig. 1 zeigt in einem schematischen Querschnitt eine Vorrichtung 10 zum Auftragen von Tropfen eines Bindermaterials auf ein Hochleistungstextil 12, das in Fig. 1 schematisch angedeutet ist, jedoch nicht Bestandteil der Vorrichtung 10 selbst ist. Die Vorrichtung 10 weist eine Lagervorrichtung 14 zum Lagern von Bindermaterial, eine Aufheizvorrichtung 16 zum Aufschmelzen des Bindermaterials und eine Bebinderungseinrichtung 18 mit wenigstens einer Düse 20 zum Aufbringen des flüssigen Bindermaterials auf. Die Lagervorrichtung 14 dient zum Lagern von Bindermaterial, das bei normalen Raumbedingungen fest, pulverförmig oder mindestens derart viskos ist, dass eine Tropfenbildung an der Düse 20 nicht möglich ist. Die Aufheizvorrichtung 16 dient dem Erwärmen des Bindermaterials über eine Schmelztemperatur, bei welcher eine Tropfenbildung des Bindermaterials an der Düse möglich ist. Die Düse 20 ist vorgesehen, um das Bindermaterial auf ein Hochleistungstextil in einzelnen, in der Menge und/oder Anzahl dosierbaren Bindertropfen aufzubringen.

In Fig. 1 ist die Vorrichtung 10 in einem Zustand gezeigt, bei der in der Lagervorrichtung 14 ein Bindermaterial 22 gelagert ist, das bei normalen Raumbedingungen fest oder mindestens hochviskos ist. Dazu weist die Lagervorrichtung 14 ein Lagervolumen 24 auf, das in Fig. 1 nicht ganz mit Bindermaterial befüllt ist. Die Aufheizvorrichtung 16 weist ein Aufheizvolumen 26 auf, das ebenfalls nicht ganz mit (aufgeweichtem) Bindermaterial befüllt ist. Das Bindermaterial 22 kann in der Lagervorrichtung 14 auch in Pulverform vorliegen.

Während das Bindermaterial in der Lagervorrichtung 14 in einem festen oder mindestens hochviskosen Zustand gezeigt ist, der mit einer ersten Schraffur 28 angedeutet ist, ist das Bindermaterial 22 in der Aufheizvorrichtung 16 in einem zweiten Zustand mit einer zweiten Schraffur 30 gezeigt, in welchem das Bindermaterial derart flüssig ist, dass es mit der Bebinderungseinrichtung 18, z.B. der wenigstens einen Düse 20 als Tropfen 32 dosierbar auf das Hochleistungstextil 12 aufgebracht werden kann. Mit einem Pfeil 34 ist eine Relativbewegung zwischen der Vorrichtung 10 und dem Hochleistungstextil 12 angedeutet, bzw. eine fortlaufende Produktion des bebinderten Halbzeugs, was nach Passieren der Bebinderungseinrichtung 18 vorliegt, was mit einem Bezugszeichen 36 angedeutet ist, das auf das dann vorliegende bebinderte Halbzeug verweist, wobei das Passieren der Bebinderungseinrichtung schematisch mit einer gestrichelten Linie 38 angedeutet ist.

Gemäß einem weiteren Beispiel (nicht gezeigt) wird das Bindermaterial auf ausgelegte Bahnen des Hochleistungstextils aufgebracht. Beispielsweise fährt die Bebinderungseinrichtung 18, oder sogar die gesamte Vorrichtung 10, die Bahnen zum Aufbringen des Bindermaterials ab, oder die Bahnen werden relativ zur Bebinderungseinrichtung 18 bewegt. Anschließend liegt das Halbzeug in einzelnen Bahnen vor, die beispielsweise gestapelt gelagert werden können.

Wie ebenfalls in Fig. 1 dargestellt, ist das Aufheizvolumen 26 kleiner als das Lagervolumen 24. Das Aufheizvolumen 26 ist ausgelegt derart, dass eine darin enthaltene Verbrauchsmenge 40, die mit der zweiten Schraffur 30 dargestellt ist, über einen Verflüssigungszeitraum auf die Aushärtetemperatur erhitzt werden kann, wobei der Verflüssigungszeitraum kleiner als ein Aushärtezeitraum des Bindermaterials ist. Dies soll auch in den folgenden Figuren näher erläutert werden.

In Fig. 2 ist ein Verfahren 200 zur Herstellung eines mit Bindermaterial versehenen textilen Halbzeugs zur Anfertigung eines Faserverbundbauteils dargestellt, wobei folgende Schritte vorgesehen sind:
- In einem ersten Zuführungsschritt 210 wird ein Bindermaterial von einer Lagervorrichtung an eine Aufheizvorrichtung zugeführt.
- In einem folgenden Erwärmungsschritt 212 wird das in der Aufheizvorrichtung befindliche Bindermaterial über eine Schmelztemperatur des Bindermaterials erwärmt.
- In einem zweiten Zuführungsschritt 214 wird das flüssige Bindermaterial an wenigstens eine Bebinderungseinrichtung mit wenigstens einer Düse zugeführt.
- In einem folgenden Aufbringungsschritt 216 wird das Bindermaterial auf ein Hochleistungstextil durch die wenigstens eine Düse in einzelnen, in der Menge und/oder Anzahl dosierbaren Bindertropfen aufgebracht.

Erfindungsgemäß ist das Bindermaterial bei normalen Raumbedingungen mindestens derart viskos, dass eine Tropfenbildung an der Düse nicht möglich ist, und die Schmelztemperatur ist mindestens derart hoch, dass eine Tropfenbildung des Bindermaterials an der Düse möglich ist. Der erste Zuführungsschritt 210 wird auch als Schritt a) bezeichnet, der Erwärmungsschritt 212 als Schritt b), der zweite Zuführungsschritt 214 als Schritt c) und der Aufbringungsschritt 216 als Schritt d).

Gemäß einem weiteren Ausführungsbeispiel des Verfahrens ist das Bindermaterial bei Raumtemperatur fest oder sehr hochviskos.

Gemäß einem weiteren, nicht gezeigten Ausführungsbeispiel wird in Schritt d) das Bindermaterial mit den Tropfen derart aufgebracht, dass das Hochleistungstextil abwechselnd erste Bereiche mit Bindermaterial und zweite Bereiche ohne Bindermaterial aufweist, und/oder das Bindermaterial über die Breite des Hochleistungstextils mit der gleichen Verteilung aufgebracht wird.

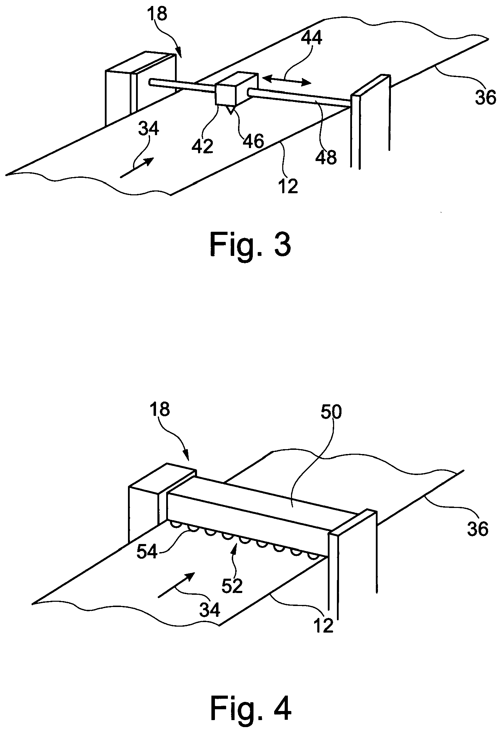

Gemäß dem in Fig. 3 gezeigten Ausführungsbeispiel weist die Bebinderungseinrichtung 18 eine Druckvorrichtung 42 auf, die das Hochleistungstextil 12 senkrecht zur Materialproduktionsrichtung 34 zeilenweise abfährt, was mit einem Doppelpfeil 44 angedeutet ist, wobei die Druckvorrichtung 42 die wenigstens eine Düse aufweist, wie in Fig. 3 mit Bezugszeichen 46 angedeutet ist. Die Druckvorrichtung 42 ist beispielsweise an einer Haltevorrichtung 48 beweglich gehalten.

Gemäß einem weiteren, in Fig. 4 gezeigten Beispiel weist die Bebinderungseinrichtung 18 eine Druckerleiste 50 auf, die sich über die gesamte Breite des Hochleistungstextils 12 erstreckt und eine Vielzahl 52 von Düsen 54 aufweist.

Gemäß einem weiteren, nicht gezeigten Beispiel ist eine Matrix mit mehreren Düsen vorgesehen, z.B. mit Spalten und Zeilen, oder auch in einem versetzten Düsenraster.

Mit der Druckvorrichtung 42 oder der Druckerleiste 50 kann das Bindermaterial in einer reproduzierbaren Menge und in einer reproduzierbaren Verteilung aufgebracht werden.

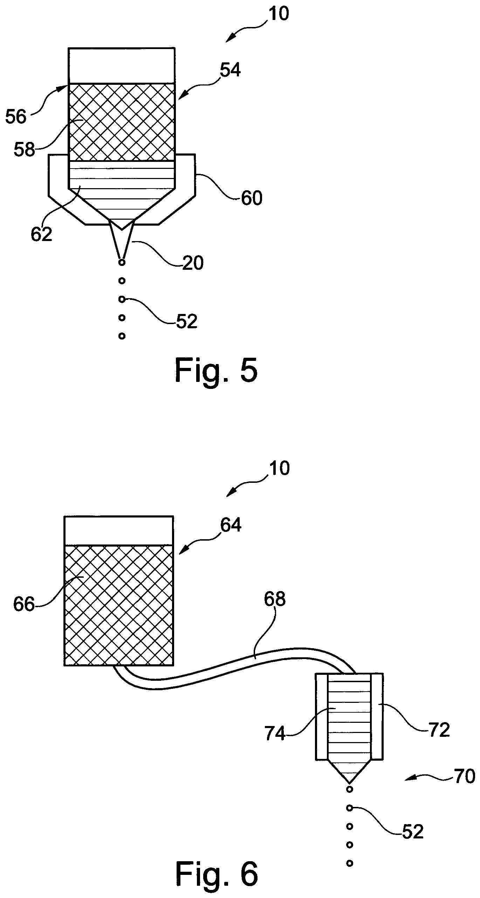

In Fig. 5 ist ein Ausführungsbeispiel der Vorrichtung 10 gezeigt, bei der eine integrale Ausbildung der Lagervorrichtung 14, der Aufheizvorrichtung 16 und der Bebinderungseinrichtung 18 vorgesehen ist. Dazu ist eine Vorrichtung 54 vorgesehen, bei der in einem oberen Bereich 56 Bindermaterial in einem festen bzw. hochviskosen Zustand vorgesehen ist, was mit einer dritten Schraffur 58 angedeutet ist. Im unteren Bereich ist eine Aufheizvorrichtung 60 angedeutet, die einen in diesem Bereich befindlichen Binderanteil erhitzt, so dass das Bindermaterial hier flüssig vorliegt, was mit einer vierten Schraffur 62 angedeutet ist. Im unteren Bereich schließt sich die Düse 20 an, aus der die Vielzahl der Tropfen 52 kontrolliert auf ein nicht dargestelltes Hochleistungstextil austretend aufgebracht werden kann. Bei der in Fig. 5 gezeigten Vorrichtung kann folglich auch ein Nachdrücken des Binders von oben durch den Bindervorrat auf den flüssigen Bereich vorgesehen sein. Die Heizvorrichtung 60 ist lediglich schematisch angedeutet und kann gemäß einer weiteren (nicht näher gezeigten) Ausführungsvariante auch mit der Düse integriert, und damit derart kleiner ausgebildet werden, dass eine möglichst kurze Aufheizung des Bindermaterials nur in der Düse lokal erfolgen kann.

Gemäß einem weiteren (nicht gezeigten Beispiel) kann die Aufheizvorrichtung auch direkt in der Düse angeordnet sein, so dass auch das Aufheizvolumen verschwindend gering ist. Beispielsweise wird das feste, pulverförmige oder hochviskose Bindermaterial direkt in die Düse befördert, dort direkt erhitzt und gleich aufgetropft.

In Fig. 6 ist ein weiteres Ausführungsbeispiel der Vorrichtung 10 gezeigt, bei der ein Vorratsbehälter 64 mit einem Bindervorrat 66 über einen Förderschlauch 68 mit einer beheizten Düsenvorrichtung 70 verbunden ist. Je nach Bindermaterial, d.h. abhängig davon, ob das Bindermaterial in nicht erhitztem durch den Förderschlauch transportiert werden kann - beispielsweise bei einem pulverförmigen Bindermaterial, kann der Förderschlauch 68, z.B. bei einem hochviskosen Bindermaterial, das in Art eines Blocks in dem Vorratsbehälter 64 vorliegt, auch beheizt ausgeführt werden, wobei dann eine möglichst dünne Ausbildung des Förderschlauchs, d.h. mit möglichst geringem inneren Durchmesser, und eine große Fließgeschwindigkeit für eine möglichst geringe Verweildauer von Vorteil sind. Der Förderschlauch 68 kann austauschbar sein. Die beheizte Düsenvorrichtung 70 ist mit einer Heizvorrichtung 72 angedeutet, und weist ein kleines Düsenvolumen 74 auf, in welchem ausreichend flüssiges Bindermaterial vorliegt, um dieses in Form der Tropfen 52 auf das Hochleistungstextil (in Fig. 6 ebenfalls nicht gezeigt) aufzubringen.

Selbstverständlich können die lediglich schematisch angedeuteten Varianten der Vorrichtung zum Auftragen des Bindermaterials in Tropfenform aus Fig. 5 und 6 auch mit den Ausführungsbeispielen in Fig. 3 und Fig. 4 kombiniert werden, d.h. als einzelne Druckvorrichtung 42 oder als Druckerleisten 50.

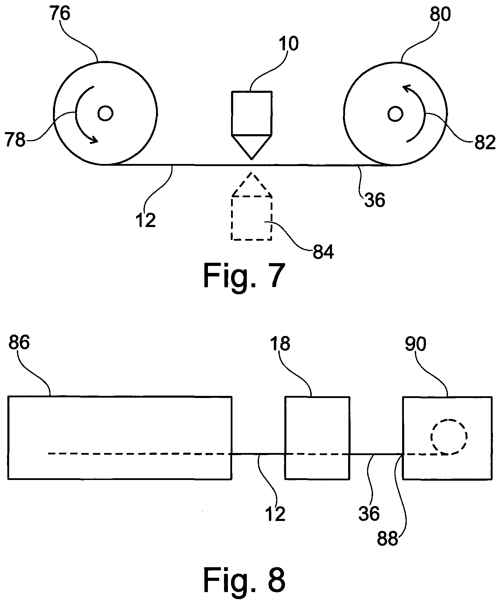

Gemäß dem in Fig. 7 gezeigten Ausführungsbeispiel kann das Hochleistungstextil 12 auf einer ersten Lagervorrichtung 76, beispielsweise einer ersten Lagerrolle, aufgerollt sein, um von dieser Lagervorrichtung 76 abgerollt zu werden, was mit einem Pfeil 78 angedeutet ist. Anschließend passiert das Hochleistungstextil 12 die Vorrichtung 10 zum Auftragen von Tropfen eines Bindermaterials auf das Hochleistungstextil 12 und liegt danach als Halbzeug 36 vor, so dass das Halbzeug 36 auf einer zweiten Lagervorrichtung 80, beispielsweise einer zweiten Lagerrolle, aufgerollt werden kann, was mit einem zweiten Pfeil 82 angedeutet ist.

Das Bindermaterial kann erfindungsgemäß von einer Seite auf das Hochleistungstextil 12 aufgetragen werden, oder von beiden Seiten, wie dies mit einer zweiten Vorrichtung 84 zum Auftragen von Tropfen eines Bindermaterials in Fig. 7 angedeutet ist.

Es sei darauf hingewiesen, dass die beidseitige Auftragung des Bindermaterials auch durch eine einzige Vorrichtung 10 erfolgen kann, bei welcher die Bebinderungseinrichtung 18 eine Vielzahl von Düsen 20, d.h. mindestens zwei Düsen, aufweist, um von beiden Seiten Bindermaterial in Tropfenform aufbringen zu können. Mit anderen Worten, es kann dazu eine gemeinsame Lagervorrichtung und eine gemeinsame Aufheizvorrichtung vorgesehen sein.

Wie in Fig. 8 schematisch dargestellt ist, kann gemäß einem weiteren Ausführungsbeispiel eine Textilherstellungsvorrichtung 86 zur Anfertigung des Hochleistungstextils 12 vorgesehen sein. Weiter ist die Bebinderungseinrichtung 18 dargestellt, mit welcher das Bindermaterial auf das Hochleistungstextil aufgebracht werden kann. Die Bebinderungseinrichtung ist vor einer Zuführung 88 an eine Lagereinrichtung 90 angeordnet, in welcher das fertige Halbzeug beispielwiese aufgerollt wird.

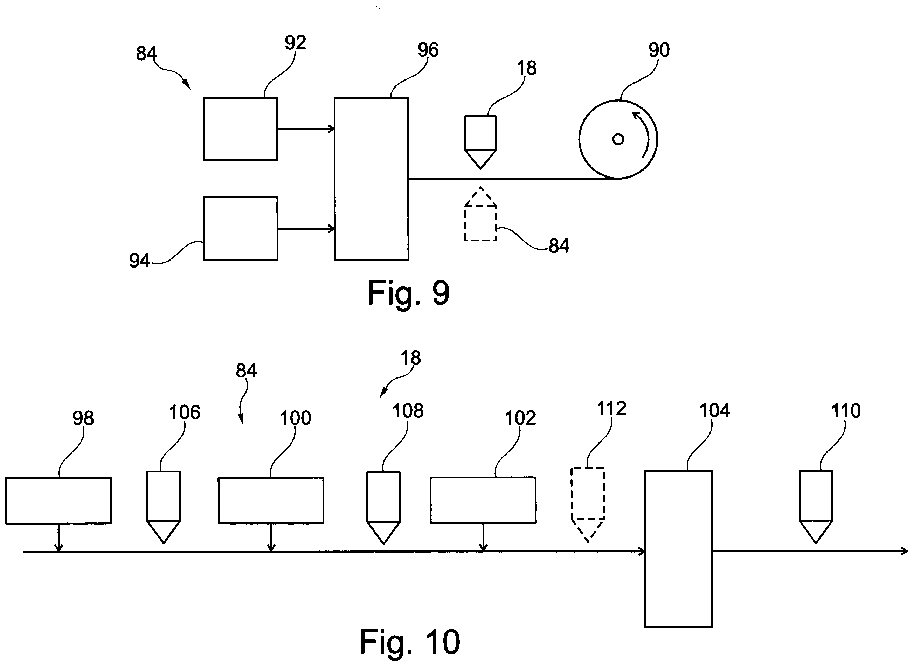

Gemäß dem in Fig. 9 gezeigten Beispiel weist die Textilherstellungsvorrichtung 84 beispielsweise einen Schussfaden-Zulauf 92 und einen Kettfaden-Zulauf 94 und eine Webstuhleinrichtung 96 auf. Anschließend ist die Bebinderungseinrichtung 18, bzw. auch die beidseitige Aufbringung des Bindermaterials, angedeutet durch das gestrichelte gespiegelte Symbol 84, vorgesehen, gefolgt von der schematisch angedeuteten Lagereinrichtung 90. Es sei jedoch darauf hingewiesen, dass die Lagervorrichtung 90 kein zwingendes Merkmal der anderen in Fig. 9 gezeigten Merkmale darstellt.

Gemäß dem in Fig. 10 gezeigten Ausführungsbeispiel weist die Textilherstellungsvorrichtung 84 eine erste Legeeinheit 98, eine zweite Legeeinheit 100, eine dritte Legeeinheit 102 und eine Wirkeinheit 104 auf. Die Legeeinheiten können auch in geringerer oder größerer Anzahl vorgesehen sein. Die Legeeinheiten 98, 100, 102 fertigen jeweils ein Sub-Hochleistungstextil an, und die Wirkeinheit 104 dient der Verbindung der Sub-Hochleistungstextile. Wie schematisch in Fig. 10 gezeigt ist, weist die Bebinderungseinrichtung 18 eine erste Druckeinheit 106 und eine zweite Druckeinheit 108 auf, die jeweils im Anschluss an die erste bzw. zweite Legeeinheit 98, 100 vorgesehen sind. Außerdem ist eine weitere Druckeinheit 110 im Anschluss an die Wirkeinheit 104 vorgesehen. Mit einem weiteren gestrichelten Symbol ist angedeutet, dass auch eine dritte Druckeinheit 112 im Anschluss an die dritte Legeeinheit 102 vorgesehen sein kann. Die Druckeinheiten 106, 108, 112 dienen jeweils dazu, Bindermaterial auf jeweils eines der Sub-Hochleistungstextile aufzubringen. Die weitere Druckeinheit 110 kann dann zusätzliches Bindermaterial auf dem Hochleistungstextil anordnen, das bereits Bindermaterial aufweist.

Es sei darauf hingewiesen, dass die weitere Druckeinheit 110 auch weggelassen werden kann, wenn beispielsweise nach jeder Legeeinheit eine Druckeinheit vorgesehen ist. Außerdem wird darauf hingewiesen, dass nicht nach jeder Legeeinheit auch eine Druckeinheit vorgesehen sein muss. Selbstverständlich kann auch vorgesehen sein, dass an einer oder mehreren der Druckeinheiten Bindermaterial von zwei Seiten auf das Hochleistungstextil aufgebracht wird.

Bei dem in Fig. 10 gezeigten Ausführungsbeispiel kann im Anschluss eine Lagervorrichtung, beispielsweise eine Rolle für ein fertiges Halbzeug, vorgesehen sein.

Bei der in Fig. 10 gezeigten Vorrichtung handelt es sich beispielsweise um eine Multiaxialgelegeanlage mit einer Bebinderung zwischen den Einzelfaserlagen und einer abschließenden Bebinderung der Fasern von außen. Die Druckeinheiten, die jeweils den Legeeinheiten zugeordnet sind, können demnach auch als Zwischen-Bebinderungseinheiten bezeichnet werden.

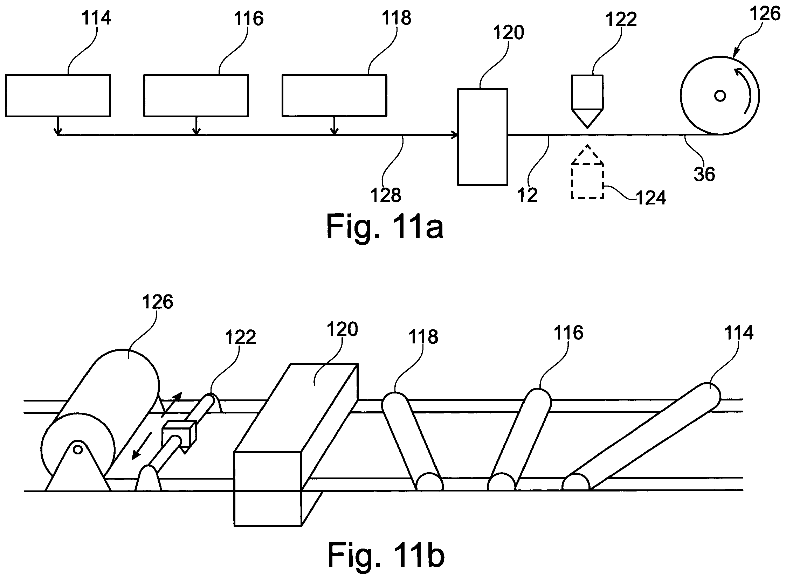

In Fig. 11A ist ein weiteres Beispiel gezeigt, bei dem eine erste Legeeinheit 114, eine zweite Legeeinheit 116 und eine dritte Legeeinheit 118 angeordnet sind, gefolgt von einer Wirkeinheit 120. Anschließend ist eine Bebinderungseinrichtung 122 vorgesehen, die, wie bereits oberhalb angedeutet, auch von einer zweiten Seite her, angedeutet durch ein gestricheltes Symbol 124, Bindermaterial auf dem Hochleistungstextil 12 anordnen kann, das in Folge dessen als Halbzeug 36 vorliegt. Im Anschluss kann eine Lagervorrichtung 126 vorgesehen sein, die jedoch nur optional gezeigt ist.

Bei der in Fig. 11A gezeigten Vorrichtung handelt es sich beispielsweise um eine Multiaxialgelegeanlage mit einer Bebinderung von außen, wobei die einzelnen Legeeinheiten Fasern in verschiedenen Richtungen ablegen, was mit einem Pfeil 128 angedeutet ist, der das Eintreten der Fasern in die Wirkeinheit andeutet, woraufhin die Fasern als das Hochleistungstextil 12 die Wirkeinheit verlassen.

In Fig. 11B ist die Vorrichtung aus Fig. 11A zusätzlich in einer perspektivischen Ansicht dargestellt, aus der hervorgeht, dass die Legeeinheiten 114, 116, 118 die Fasern in verschiedenen Richtungen ablegen, was durch die unterschiedlichen Ausrichtungen der jeweiligen Legeeinheiten angedeutet ist. Die Bebinderungseinrichtung 122 ist nur beispielhaft mit einem linear beweglichen Druckschlitten ausgebildet: selbstverständlich kann hier auch eine über die gesamte Breite reichende Düsenreihe vorgesehen sein, oder auch eine Düsenmatrix.

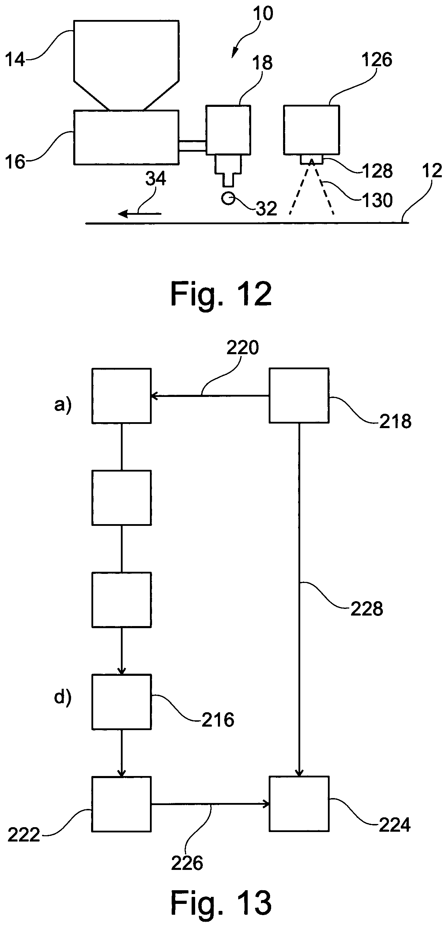

Gemäß einem weiteren Ausführungsbeispiel, das in Fig. 12 gezeigt ist, weist die Vorrichtung 10 ein Strukturerkennungssystem 126 auf, das eine Struktur des Hochleistungstextils 12 ermittelt, beispielsweise durch eine Abtastung der Oberfläche mittels einer Kameraeinrichtung 128 und einer anschließenden Bildauswertung (nicht näher gezeigt). Statt der Kameraeinrichtung 128 kann auch eine andere Einrichtung vorgesehen sein, die in der Lage ist, die Struktur des Hochleistungstextils 12 zu ermitteln, was mit einem gestrichelten Fächer 130 angedeutet ist. Beispielsweise kann die Struktur auch mittels einer Röntgeneinrichtung durchleuchtet werden oder mittels anderer elektromagnetischer Bestrahlung. Die Bindertropfen 32 können anschließend mit der Bebinderungseinrichtung 18 auf die Struktur abgestimmt aufgebracht werden.

Beispielsweise kann das Bindermaterial derart auf eine Textilstruktur aufgebracht werden, wobei die Textilstruktur eine Vielzahl von Verstärkungsfaserbündeln aus Hochleistungsfasern aufweist, wobei zwischen benachbarten Verstärkungsfaserbündeln Verschiebungsbereiche ausgebildet sind und benachbarte Verstärkungsfaserbündel gegeneinander verschiebbar sind, so dass mit dem Bindermaterial eine Fixierungsstruktur die Verstärkungsfaserbündel in Abhängigkeit von der Textilstruktur derart mit einem Fixierungsmuster fixiert, dass die Verstärkungsfaserbündel wenigstens teilweise fixiert sind und in anderen Bereichen Verschiebungsbereiche teilweise freibleiben, um eine Verformbarkeit des bebinderten Halbzeugs zu gewährleisten. Damit kann ein Textilmaterial mit Bindermaterial sozusagen vorverstärkt werden, und dennoch eine ausreichende Flexibilität aufweisen, um in dreidimensionale Formen eingelegt zu werden, bei denen eine Verschiebung der Fasern zueinander eine Faltenbildung möglichst verhindert.

Die Strukturerkennung kann selbstverständlich auch mit den anderen gezeigten Ausführungsbeispielen kombiniert werden.

In den folgenden Figuren werden Ausführungsbeispiele des Verfahrens, das in Fig. 2 in den grundsätzlichen Schritten gezeigt ist, beschrieben.

Fig. 13 zeigt ein Beispiel des Verfahrens, bei dem als Bindermaterial und als Matrixmaterial, das bei der Herstellung des späteren Faserverbundbauteils verwendet wird, der gleiche Werkstoff verwendet wird. Dies ist durch einen ersten Rahmen 218 angedeutet, der darstellt, dass ein bestimmtes Material dem Schritt a) zur Verfügung gestellt wird, was durch einen ersten Pfeil 220 symbolisiert ist. Ein zweiter Rahmen 222, der sich an den Schritt d) anschließt, deutet eine weitere Verwendung, bzw. auch eine Lagerung, des Halbzeugs an, das im Ergebnis nach Schritt d) vorliegt. Das Halbzeug wird dann beispielsweise einem Formgebungs- und Aushärtungsschritt 224 zugeführt, was mit einem weiteren Pfeil 226 angedeutet ist, wobei diesem Schritt 224 auch das gleiche Material aus dem ersten Rahmen 218 zugeführt wird, was mit einem dritten Pfeil 228 angedeutet ist. Der erste Pfeil 220 stellt also das Bindermaterial dar, und der dritte Pfeil 228 das Matrixmaterial, wobei die beiden Materialien auf dem gleichen Werkstoff beruhen, bzw. der gleiche Werkstoff dafür verwendet wird, was mit dem gemeinsamen Ausgangsrahmen 218 angedeutet ist.

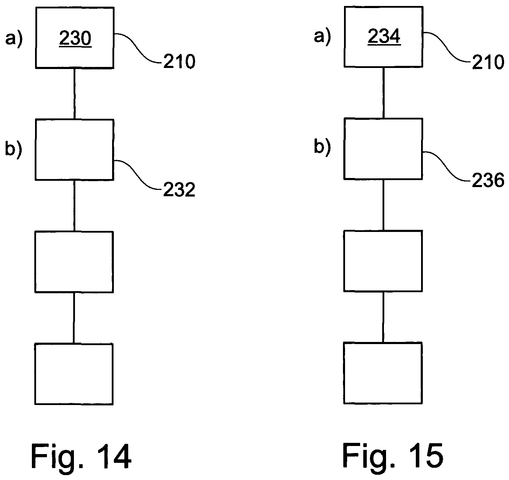

In Fig. 14 ist ein weiteres Ausführungsbeispiel des Verfahrens gezeigt, bei dem das Bindermaterial ein Duroplast 230 ist, das in dem Zuführungsschritt 210 verwendet wird, wobei das Duroplast 230 bei einer Aushärtetemperatur über einen Aushärtezeitraum aushärtet. In Schritt b) wird eine Verbrauchsmenge über einen Verflüssigungszeitraum auf die Aushärtetemperatur in einem Erhitzungsschritt 232 erhitzt, wobei der Verflüssigungszeitraum kleiner als der Aushärtezeitraum ist. Der Schritt b) ist bei dem Duroplast 230 ausreichend kurz, um ein vollständiges Aushärten des Duroplasts zu verhindern bzw. zu vermeiden.

Gemäß einem weiteren Ausführungsbeispiel, in Fig. 15 gezeigt, ist das Bindermaterial in dem Zuführungsschritt 210 ein Thermoplast 234, der in einem Einsatztemperaturbereich fest ist und der oberhalb des Einsatztemperaturbereichs weich und bei Überschreiten einer Schmelztemperatur flüssig wird. Das Erhitzen in Schritt b) erfolgt auf mindestens die Schmelztemperatur in einem Erhitzungsschritt 236.

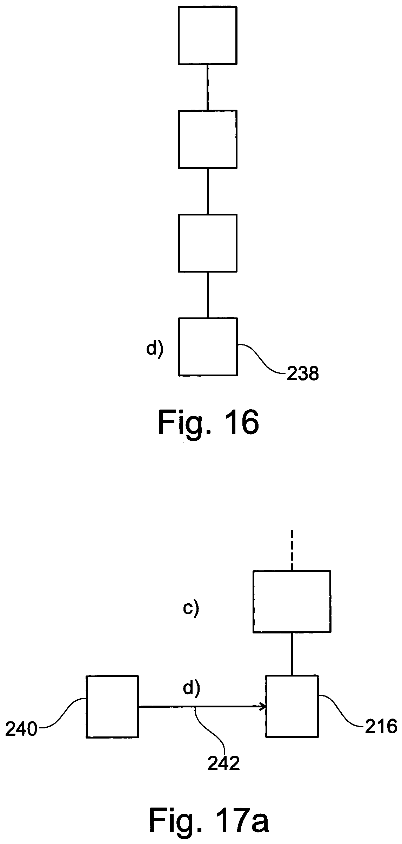

In Fig. 16 ist ein Ausführungsbeispiel gezeigt, bei dem in Schritt d) in einem Aufbringungsschritt 238 das Hochleistungstextil nicht erwärmt wird.

Gemäß dem in Fig. 17A gezeigten Ausführungsbeispiel wird in einem Zuführungsschritt 240 ein bereits gefertigtes Hochleistungstextil, das von einer Rolle, auf der es aufgerollt gelagert ist, abgerollt und dem Schritt d), d.h. dem Aufbringungsschritt 216 zur Verfügung gestellt, was mit einem Pfeil 242 angedeutet ist.

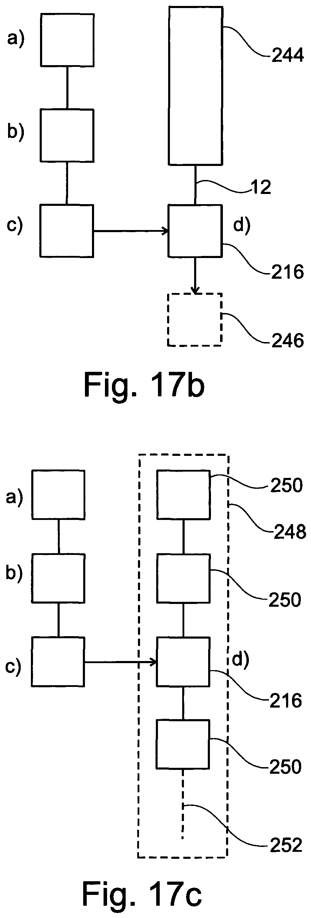

Gemäß dem in Fig. 17B gezeigten Ausführungsbeispiel ist eine Fertigung 244 des Hochleistungstextils 12 vorgesehen, und das Aufbringen des Bindermaterials in dem Aufbringungsschritt 216, d.h. Schritt d), erfolgt im unmittelbaren Anschluss an die Fertigung 244. Danach liegt das bereits erwähnte Halbzeug vor, und kann einer anschließenden Verwendung, z.B. Lagerung, zugeführt werden, was mit einem gestrichelten Rahmen 246 angedeutet ist.

Gemäß dem in Fig. 17C gezeigten Ausführungsbeispiel ist das Zuführen 216, d.h. der Schritt d), in eine Fertigung 248 des Hochleistungstextils integriert, d.h. die Aufbringung des Bindermaterials erfolgt während der Fertigung 248. Die Fertigung 248 ist mit einem umfassenden gestrichelten Rahmen angedeutet, innerhalb dessen mehrere Fertigungsschritte 250 vorgesehen sein können, auf die hier jedoch nicht näher eingegangen werden soll. Dabei können auch weniger oder mehr Schritte 250 vorgesehen sein, was mit einer gestrichelten Linie 252 angedeutet ist.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer, oben beschriebener Ausführungsbeispiele und Aspekte verwendet werden können. Bezugszeichen in den Ansprüchen sind nicht als Einschränkung anzusehen.

## Patentansprüche

1. Vorrichtung (10) zum Auftragen von Tropfen eines Bindermaterials auf ein Hochleistungstextil, wobei die Vorrichtung aufweist:
- eine Lagervorrichtung (14) zum Lagern von Bindermaterial;
- eine Aufheizvorrichtung (16) zum Verflüssigen des Bindermaterials; und
- eine Bebinderungseinrichtung (18) mit wenigstens einer Düse (20) zum Aufbringen des flüssigen Bindermaterials;
wobei die Lagervorrichtung angepasst ist zum Lagern von Bindermaterial, das bei normalen Raumbedingungen fest oder mindestens derart viskos ist, dass eine Tropfenbildung an der Düse nicht möglich ist;
wobei die Aufheizvorrichtung angepasst ist zum Erwärmen des Bindermaterials über eine Verflüssigungstemperatur des Bindermaterials, bei der eine Tropfenbildung des Bindermaterials an der Düse möglich ist;
wobei die wenigstens eine Düse angepasst ist zum Aufbringen des Bindermaterials auf ein Hochleistungstextil in einzelnen, in der Menge und/oder Anzahl dosierbaren Bindertropfen (32); und
wobei die Bebinderungseinrichtung aufweist:
- eine Druckvorrichtung (42), die dazu ausgebildet ist, das Hochleistungstextil senkrecht zur Materialproduktionsrichtung zeilenweise abzufahren, und die wenigstens eine Düse aufweist; oder
- eine Druckerleiste (50), die sich über die gesamte Breite des Hochleistungstextils erstreckt und eine Vielzahl (52) von Düsen (54) aufweist.

2. Vorrichtung nach Anspruch 1, wobei die Lagervorrichtung ein Lagervolumen (24) und die Aufheizvorrichtung ein Aufheizvolumen (26) aufweist;
wobei das Aufheizvolumen kleiner als das Lagervolumen ist; und
wobei das Aufheizvolumen so ausgelegt ist, dass eine darin enthaltene Verbrauchsmenge (40) über einen Verflüssigungszeitraum auf die Verflüssigungstemperatur erhitzt wird, wobei der Verflüssigungszeitraum kleiner als ein bei dieser Verflüssigungstemperatur bei diesem Material zu erwartender Verfestigungs- oder Aushärtezeitraum des Bindermaterials ist.

3. Vorrichtung nach Anspruch 1 oder 2, wobei mit der Bebinderungseinrichtung das Bindermaterial in einer reproduzierbaren Menge und in einer reproduzierbaren Verteilung aufbringbar ist.

4. Vorrichtung nach einem der vorhergehenden Ansprüche, mit einer Textilherstellungsvorrichtung (84) zur Anfertigung des Hochleistungstextils;
wobei mit der Bebinderungseinrichtung das Bindermaterial auf das Hochleistungstextil aufbringbar ist vor einer Zuführung (88) des bebinderten Hochleistungstextils als fertiges Halbzeug an eine Lagereinrichtung (90).

5. Vorrichtung nach einem der vorhergehenden Ansprüche, wobei ein Strukturerkennungssystem (126) vorgesehen ist, das eine Struktur des Hochleistungstextils ermittelt; und wobei die Bindertropfen mit der Bebinderungseinrichtung auf die Struktur abgestimmt aufbringbar sind.

6. Verwendung einer Vorrichtung nach einem der vorhergehenden Ansprüche zum Aufragen von Bindermaterial auf ein Hochleistungstextil aus Hochleistungs- bzw. Verstärkungsfasern.

7. Verwendung nach Anspruch 6, wobei in der Lagervorrichtung ein Bindermaterial (22) gelagert ist, das bei normalen Raumbedingungen fest oder mindestens hochviskos ist.

8. Verfahren (100) zur Herstellung eines mit Bindermaterial versehenen textilen Halbzeugs zur Anfertigung eines Faserverbundbauteils, umfassend folgende Schritte:
a) Zuführen (110) eines Bindermaterials von einer Lagervorrichtung an eine Aufheizvorrichtung;
b) Erwärmen (112) des in der Aufheizvorrichtung befindlichen Bindermaterials über eine Verflüssigungstemperatur des Bindermaterials;
c) Zuführen (114) des flüssigen Bindermaterials an wenigstens eine Bebinderungseinrichtung mit wenigstens einer Düse; und
d) Aufbringen (116) des Bindermaterials auf ein Hochleistungstextil durch die wenigstens eine Düse in einzelnen, in der Menge und/oder Anzahl dosierbaren Bindertropfen;
wobei das Bindermaterial bei normalen Raumbedingungen fest oder mindestens derart viskos ist, dass eine Tropfenbildung an der Düse nicht möglich ist; und
wobei die Verflüssigungstemperatur mindestens derart hoch ist, dass eine Tropfenbildung des Bindermaterials an der Düse möglich ist.

9. Verfahren nach Anspruch 8, wobei als Bindermaterial und als Matrixmaterial, das bei der Herstellung des späteren Faserverbundbauteils verwendet wird, der gleiche Werkstoff verwendet wird (128).

10. Verfahren nach Anspruch 8 oder 9, wobei in Schritt d) das Bindermaterial mit den Tropfen derart aufgebracht wird, dass:
- das Hochleistungstextil abwechselnd erste Bereiche mit Bindermaterial und zweite Bereiche ohne Bindermaterial aufweist; und/oder
- das Bindermaterial über die Breite des Hochleistungstextils mit der gleichen Verteilung aufgebracht wird.

11. Verfahren nach einem der Ansprüche 8 bis 10,
i) wobei das Bindermaterial ein Duroplast (230) ist, das bei einer bestimmten Temperatur über einen jeweils dieser Temperatur zugeordneten Zeitraum fest wird bzw. aushärtet;
wobei in Schritt b) eine Verbrauchsmenge über einen Verflüssigungszeitraum auf die Verflüssigungstemperatur erhitzt wird (232); und wobei der Verflüssigungszeitraum kleiner als der der Verflüssigungstemperatur zugeordnete Zeitraum ist, in dem eine Verfestigung aufgrund einer chemischen Reaktion auftreten würde;
oder
ii) wobei das Bindermaterial ein Thermoplast (234) ist, der in einem Einsatztemperaturbereich fest ist und der oberhalb des Einsatztemperaturbereichs weich und bei Überschreiten einer Schmelztemperatur flüssig wird;
wobei das Erhitzen in Schritt b) auf mindestens die Schmelztemperatur erfolgt (236).

12. Verfahren nach einem der Ansprüche 8 bis 11, wobei zum Aufbringen des Bindermaterials das Hochleistungstextil nicht erwärmt wird (238).

13. Verfahren nach einem der Ansprüche 8 bis 12, wobei das Hochleistungstextil eine Textilstruktur aufweist mit einer ersten Vielzahl von Verstärkungsfaserbündeln aus Hochleistungsfasern, wobei die Verstärkungsfaserbündel zu einer Struktur angeordnet sind;
wobei das Bindermaterial in direkter Abhängigkeit der Textilstruktur in einem Muster aufgebracht wird, das sich an der Struktur der Verstärkungsfaserbündel orientiert;
wobei das Bindermaterial als eine Fixierungsstruktur aufgebracht wird;
wobei bei der Textilstruktur zwischen benachbarten Verstärkungsfaserbündeln Verschiebungsbereiche ausgebildet sind und benachbarte Verstärkungsfaserbündel gegeneinander verschiebbar sind; und
wobei das Bindermaterial die Verstärkungsfaserbündel in Abhängigkeit von der Textilstruktur derart mit einem Fixierungsmuster fixiert, dass die Verstärkungsfaserbündel wenigstens teilweise fixiert sind und die Verschiebungsbereiche wenigstens teilweise frei bleiben.

14. Verfahren nach einem der Ansprüche 8 bis 13, wobei das Bindermaterial aufgebracht wird:
i) auf ein bereits gefertigtes Hochleistungstextil, das von einer Rolle, auf der es aufgerollt gelagert ist, abgerollt wird (240); oder
ii) im unmittelbaren Anschluss an eine Fertigung (244) des Hochleistungstextils; oder
iii) während einer Fertigung (248) des Hochleistungstextils.

## Claims

1. Device (10) for applying drops of a binder material to a high-performance textile, wherein the device comprises:
- a storage device (14) for storing binder material;
- a heating device (16) for liquefying the binder material; and
- a binder application appliance (18) comprising at least one nozzle (20) for applying the liquid binder material;
wherein the storage device is adapted for storing binder material which in normal ambient conditions is solid or at least sufficiently viscous that drop formation at the nozzle is not possible;
wherein the heating device is adapted to heat the binder material above a liquefaction temperature of the binder material at which drop formation of the binder material at the nozzle is possible;
wherein the at least one nozzle is adapted to apply the binder material to a high-performance textile in individual binder drops (32) which can be metered in amount and/or number; and
wherein the binder application appliance comprises:
a printer device (42), which is formed to travel along the high-performance textile in lines perpendicular to the material production direction and has at least one nozzle; or
a printer bar (50), which extends over the entire width of the high-performance textile and comprises a plurality (52) of nozzles (54).

2. Device according to claim 1, wherein the storage device comprises a storage volume (24) and the heating device comprises a heating volume (26);
wherein the heating volume is less than the storage volume; and
wherein the heating volume is configured in such a way that a consumption amount (40) contained therein is heated to the liquefaction temperature over a liquefaction period, the liquefaction period being less than a solidification or hardening period for the binder material which is to be expected at this liquefaction temperature.

3. Device according to either claim 1 or claim 2, wherein by means of the binder application appliance the binder material can be applied in a reproducible amount and in a reproducible distribution.

4. Device according to any of the preceding claims, comprising a textile production device (84) for manufacturing the high-performance textile;
wherein by means of the binder application appliance the binder material can be applied to the high-performance textile before the high-performance textile to which binder has been applied is supplied (88) to a storage appliance (90).

5. Device according to any of the preceding claims, wherein a structure recognition system (126) is provided which determines a structure of the high-performance textile; and wherein by means of the binder application appliance the binder drops can be applied in a manner adapted to the structure.

6. Use of a device according to any of the preceding claims for applying binder material to a high-performance textile made of high-performance or reinforcing fibres.

7. Use according to claim 6, wherein a binder material (22) which is solid or at least highly viscous in normal ambient conditions is stored in the storage device.

8. Method (100) for producing a textile semi-finished product provided with binder material for manufacturing a fibre composite component, comprising the following steps:
a) supplying (110) a binder material from a storage device to a heating device;
b) heating (112) the binder material located in the heating device above a liquefaction temperature of the binder material;
c) supplying (114) the liquid binder material to at least one binder application appliance comprising at least one nozzle; and
d) applying (116) the binder material to a high-performance textile using the at least one nozzle, in individual binder drops which can be metered in amount and/or number;
wherein in normal ambient conditions the binder material is solid or at least sufficiently viscous that drop formation at the nozzle is not possible; and
wherein the liquefaction temperature is at least sufficiently high that drop formation of the binder material at the nozzle is possible.

9. Method according to claim 8, wherein the same material is used (128) as the binder material and as the matrix material used in producing the subsequent fibre composite component.

10. Method according to either claim 8 or claim 9, wherein in step d) the binder material is applied using the drops in such a way that:
- the high-performance textile alternately has first regions comprising binder material and second regions without binder material; and/or
- the binder material is applied in the same distribution over the width of the high-performance textile.

11. Method according to any of claims 8 to 10,
i) wherein the binder material is a thermoset (230) which becomes solid or hardens at a particular temperature over an associated period assigned to this temperature;
wherein in step b) a consumption amount is heated (232) to the liquefaction temperature over a liquefaction period; and wherein the liquefaction period is less than the period, assigned to the liquefaction temperature, in which solidification would occur as a result of a chemical reaction;
or
ii) wherein the binder material is a thermoplastic (234) which is solid in the temperature range of use and which becomes liquid above the temperature range of use and liquid when a melting point is exceeded;
wherein the heating in step b) takes place (236) to at least the melting point.

12. Method according to any of claims 8 to 11, wherein the high-performance textile is not heated (238) for the application of the binder material.

13. Method according to any of claims 8 to 12, wherein the high-performance textile has a textile structure comprising a first plurality of reinforcing fibre bundles consisting of high-performance fibres, the reinforcing fibre bundles being arranged to form a structure;
wherein the binder material, as a direct function of the textile structure, is applied in a pattern orientated to the structure of the reinforcing fibre bundle;
wherein the binder material is applied as a fixing structure;
wherein, in the textile structure, displacement regions are formed between adjacent reinforcing fibre bundles, and adjacent reinforcing fibre bundles can be displaced with respect to one another; and
wherein the binder material fixes the reinforcing fibre bundles in a fixing pattern as a function of the textile structure in such a way that the reinforcing fibre bundles are fixed at least in part and the displacement regions remain free at least in part.

14. Method according to any of claims 8 to 13, wherein the binder material is applied:
i) to a previously manufactured high-performance textile, which is unrolled (240) from a roll on which it is stored rolled up; or
ii) immediately subsequent to the manufacture (244) of the high-performance textile;
or
iii) during manufacture (248) of the high-performance textile.

## Revendications

1. Dispositif (10) destiné à appliquer des gouttes d'un matériau liant sur un textile à hautes performances, dans lequel le dispositif présente :
- un moyen de stockage (14) pour stocker le matériau liant ;
- un moyen de chauffage (16) pour fluidifier le matériau liant ; et
- un moyen d'application de liant (18) comprenant au moins une buse (20) pour appliquer le liant fluide ;
dans lequel le moyen de stockage est adapté pour stocker le matériau liant, qui, en conditions de stockage normales, est solide ou au moins visqueux de telle sorte qu'une formation de gouttes est impossible au niveau de la buse ;
dans lequel le moyen de chauffage est adapté pour chauffer le matériau liant au-dessus d'une température de fluidification du matériau liant à laquelle une formation de gouttes du matériau liant est possible au niveau de la buse ;
dans lequel l'au moins une buse est adaptée pour appliquer le matériau liant sur un textile à hautes performances dans des gouttes de liant (32) séparées, dosables en quantité et/ou en nombre ; et
dans lequel le moyen d'application de liant présente :
- un moyen d'impression (42), qui est configuré pour parcourir ligne par ligne le textile à hautes performances perpendiculairement à la direction de production du matériau, et qui présente au moins une buse ; ou
- une baguette d'impression (50), qui s'étend sur toute la largeur du textile à hautes performances et présente une pluralité (52) de buses (54).

2. Dispositif selon la revendication 1, dans lequel le moyen de stockage présente un volume de stockage (24) et le moyen de chauffage présente un volume de chauffage (26) ; dans lequel le volume de chauffage est inférieur au volume de stockage ; et
dans lequel le volume de chauffage est conçu de telle sorte qu'une quantité de consommation (40) contenue à l'intérieur est chauffée à la température de fluidification pendant une durée de fluidification, la durée de fluidification étant inférieure à une durée de solidification ou de durcissement du matériau liant attendue à cette température de fluidification pour ce matériau.

3. Dispositif selon la revendication 1 ou 2, dans lequel, avec le moyen d'application de liant, le matériau liant peut être appliqué dans une quantité reproductible et selon une répartition reproductible.

4. Dispositif selon une des revendications précédentes, comprenant un moyen de fabrication de textile (84) pour fabriquer le textile à hautes performances ;
dans lequel, avec le moyen d'application de liant, le matériau liant peut être appliqué sur le textile à hautes performances avant un acheminement (88) du textile à hautes performances muni du liant jusqu'à une installation de stockage (90) sous la forme d'un semi-produit fini.

5. Dispositif selon une des revendications précédentes, dans lequel un système d'identification des structures (126) est prévu pour déterminer une structure du textile à hautes performances ; et dans lequel les gouttes de liant sont applicables avec le moyen d'application de liant de manière coordonnée sur la structure.

6. Utilisation d'un dispositif selon une des revendications précédentes pour appliquer le matériau liant sur un textile à hautes performances composé de fibres de hautes performances ou de renforcement.

7. Utilisation selon la revendication 6, dans lequel, dans le moyen de stockage, un matériau liant (22) est stocké, qui, en conditions de stockage normales, est solide ou au moins très visqueux.

8. Procédé (100) de fabrication d'un semi-produit textile muni d'un matériau liant pour fabriquer un élément de construction renforcé de fibres, comprenant les étapes suivantes :
a) acheminement (110) d'un matériau liant depuis un moyen de stockage jusqu'à un moyen de chauffage ;
b) chauffage (112) du matériau liant se trouvant dans le moyen de chauffage au-dessus d'une température de fluidification du matériau liant ;
c) acheminement (114) du matériau liant fluide jusqu'à au moins un moyen d'application de liant comprenant au moins une buse ; et
d) application (116) du matériau liant sur un textile à hautes performances par l'intermédiaire de l'au moins une buse dans des gouttes de liant séparées, dosables en quantité et/ou en nombre ; et
dans lequel le matériau liant, en conditions de stockage normales, est solide ou au moins visqueux de telle sorte qu'une formation de gouttes est impossible au niveau de la buse ; et
dans lequel la température de fluidification est au moins tellement élevée qu'une formation de gouttes du matériau liant est possible au niveau de la buse.

9. Procédé selon la revendication 8, dans lequel, pour le matériau liant et le matériau matrice, qui est utilisé pour la fabrication de l'élément de construction renforcé de fibres ultérieur, le même matériau est utilisé (128).

10. Procédé selon la revendication 8 ou 9, dans lequel, dans l'étape d), le matériau liant est appliqué avec les gouttes de telle sorte que :
- le textile à hautes performances présente alternativement des premières zones avec le matériau liant et des secondes zones sans le matériau liant ; et/ou
- le matériau liant est appliqué sur la largeur du textile à hautes performances selon la même répartition.

11. Procédé selon une des revendications 8 à 10,
i) dans lequel le matériau liant est une matière thermodurcissable (230) qui se solidifie ou durcit à une certaine température pendant une durée respectivement associée à cette température ;
dans lequel, dans l'étape b), une quantité de consommation est chauffée à la température de fluidification pendant une durée de fluidification (232) ; et dans lequel la durée de fluidification est inférieure à la durée associée à la température de fluidification, dans laquelle une solidification se produirait suite à une réaction chimique ;
ou
ii) dans lequel le matériau liant est une matière thermoplastique (234), qui est solide dans une plage de température d'utilisation et qui est mou au-dessus de la plage de température d'utilisation et fluide en cas de dépassement d'une température de fusion ;
dans lequel le chauffage dans l'étape b) se fait au moins à la température de fusion (236).

12. Procédé selon une des revendications 8 à 11, dans lequel, pour appliquer le matériau liant, le textile à hautes performances n'est pas chauffé (238).

13. Procédé selon une des revendications 8 à 12, dans lequel le textile à hautes performances présente une structure textile comportant une première pluralité de faisceaux de fibres de renforcement composés de fibres à hautes performances, dans lequel les faisceaux de fibres de renforcement sont disposés par rapport à une structure ; dans lequel le matériau liant est appliqué directement en fonction de la structure textile sur un modèle qui est orienté sur la structure des faisceaux de fibres de renforcement ;
dans lequel le matériau liant est appliqué sous la forme d'une structure de fixation ;
dans lequel, dans la structure textile, entre des faisceaux de fibres de renforcement adjacents sont configurées des zones de décalage et des faisceaux de fibres de renforcement adjacents sont décalables les uns par rapport aux autres ; et
dans lequel le matériau liant fixe les faisceaux de fibres de renforcement avec un modèle de fixation en fonction de la structure textile de telle sorte que les faisceaux de fibres de renforcement sont au moins partiellement fixés et les zones de décalage restent au moins partiellement libres.

14. Procédé selon une des revendications 8 à 13, dans lequel le matériau liant est appliqué :
i) sur un textile à hautes performances déjà fabriqué, qui est déroulé d'un rouleau, sur lequel il est stocké enroulé (240), ou
ii) immédiatement après une fabrication (244) du textile à hautes performances ; ou
iii) pendant une fabrication (248) du textile à hautes performances.
